# EUROPEAN PATENT SPECIFICATION

(11) **EP 1 811 183 B1**
(45) Date of publication and mention of the grant of the patent: **01.07.2015**
(21) Application number: 07001068.1
(22) Date of filing: 18.01.2007
(51) Int. Cl.: F04D 29/04

(54) **Fuel-cell compressed-air supplying device**
Druckluftzufuhrvorrichtung für eine Brennstoffzelle
Pile à combustible avec dispositif de compression

(30) Priority: 19.01.2006 JP 2006011060
(43) Date of publication of application: 25.07.2007
(73) Proprietor: JTEKT Corporation, Osaka-shi Osaka 542-8502 (JP)
(72) Inventor: Taniguchi, Manabu, Osaka-shi, Osaka 542-8502 (JP); Ueyama, Hirochika, Osaka-shi, Osaka 542-8502 (JP); Miyagawa, Yasukata, Osaka-shi, Osaka 542-8502 (JP)
(74) Representative: Ter Meer Steinmeister & Partner

(56) References cited:
- EP-A1- 0 687 827
- GB-A- 2 294 299
- US-A- 5 857 348
- US-A1- 2004 005 228
- US-B1- 6 353 273

## Description

### BACKGROUND OF THE INVENTION

The present invention relates to a fuel-cell compressed-air supplying device installed at an oxygen-supply side in a fuel-cell apparatus which creates energy from hydrogen and oxygen, and for supplying compressed air to the fuel-cell. In particular, the present invention relates to a fuel-cell compressed-air supplying device suitably mounted to a fuel-cell vehicle.

Prototypes of fuel-cell vehicles which incorporate fuel-cells for running have been already fabricated, and Patent Literature 1 (JP-ANo. 2002-70762) suggests a fuel-cell vehicle incorporating a scroll compressor as a compressed-air supplying device suitable for supplying compressed air to the fuel-cells in the fuel-cell vehicle.

In fuel-cell apparatuses for use in fuel-cell vehicles, it has become a critical challenge to reduce the sizes, costs and weights of the fuel-cell apparatuses, and there has also been a need for further reducing the sizes of the compressed-air supplying devices.

Therefore, instead of the scroll compressor described in the aforementioned Patent Literature 1, which is a type of displacement type compressor, it is conceivable to employ a non-displacement type centrifugal compressor which causes no compression variation and canbe reduced in size. See for example US 2004/0005228. However, such a centrifugal compressor causes a significant variation in the axial forces which act on the impeller, thereby causing the challenge to ensure the durability of the bearing device of the centrifugal compressor. In addition, because, in a fuel-cell vehicle, lower-speed rotation during idling and higher-speed rotation during normal running are continuously repeated, there is a high demand for the compressed-air supplying device to be advantageously used during higher-speed rotation and have excellent durability.

### SUMMARY OF THE INVENTION

In view of the aforementioned circumstances, it is an object of the present invention to provide a fuel-cell compressed-air supplying device which employs a centrifugal compressor for attaining size reduction and is capable of absorbing axial force variations caused by the rotation of an impeller, which is a problem in using of the centrifugal compressor, thereby being advantageously used during higher-speed rotation and having excellent durability.

The fuel-cell compressed-air supplying device according to the present invention is a fuel-cell compressed-air supplying device for compressing air and supplying the compressed air to a fuel-cell and includes a centrifugal compressor provided in a casing, and a bearing device for supporting a rotation shaft of the compressor. Herein, the bearing device includes a pair of radial foil bearings provided coaxially with the rotation shaft for supporting the rotation shaft in the radial direction, and a control-type axial magnetic bearing having a pair of axial electromagnets facing to a flange portion provided in the rotation shaft in the axial direction for supporting the rotation shaft in the axial direction. The axial electromagnet of the axial magnetic bearing is integrated with the radial foil bearing.

For example, the radial foil bearing includes a flexible bearing foil having a bearing surface facing to the rotation shaft in the radial direction, an elastic member for supporting the bearing foil, and an outer ring for holding the bearing foil and the elastic member between the outer ring and the rotation shaft.

The axial magnetic bearing (a control-type magnetic bearing) controls a force acting between a pair of axial electromagnets including an electromagnet yoke and an electromagnet coil. Preferably, the outer ring of the radial foil bearing serves as the electromagnet yoke and the electromagnet coil is fitted into a concave portion provided in the outer ring of the radial foil bearing, so that the axial electromagnet of the axial magnetic bearing is integrated with the radial foil bearing. One of the axial electromagnets faces to the flange portion provided at one end of the rotation shaft and the other axial electromagnet faces to the flange portion provided at the other end of the rotation shaft. The electromagnet yoke may be a member provided independently of the outer ring of the radial foil bearing.

According to the aforementioned bearing device, the radial foil bearings take charge of supporting in the radial direction and ambient air is taken into between the bearing foil and the rotation shaft to generate a pressure (dynamic pressure) upon rotation of the rotation shaft; thus, the rotation shaft is held in a non-contact manner in the radial direction. Moreover, the axial magnetic bearing take charge of supporting in the axial direction and a current flowed into the electromagnet coil of the axial electromagnet is controlled; thus, the rotation shaft is held in a non-contact manner in the axial direction.

The centrifugal compressor has a configuration that the rotation shaft is rotated by the motor at a high speed so that air is flowed into the impeller provided at one end of the rotation shaft in the axial direction and compressed air is discharged in the radial direction. As a result, a large force acts on the rotation shaft in the axial direction. Accordingly, if the axial foil bearings take charge of supporting in the axial direction, there is a possibility that the rigidity of the bearings becomes insufficient. In contrast, since the axial magnetic bearing take charge of supporting in the axial direction, the load capacity is increased. In addition, when a control current is changed in accordance with variation in axial force, the non-contact support in the axial direction is ensured with respect to the variation in rotational load. When the axial magnetic bearing is integrated with the radial foil bearings, the length in the axial direction can be shortened, which can increase the natural frequency of the rotation shaft, can achieve high-speed rotation, and can reduce the size and weight.

The bearing wherein the electromagnet of the axial magnetic bearing is integrated with the radial foil bearing includes a flexible bearing foil having a bearing surface facing to the rotation shaft in the radial direction, an outer ring holding the bearing foil between the outer ring and the rotation shaft and having an annular concave portion formed at one end surface thereof, and an electromagnet coil fitted into the concave portion of the outer ring serving as an electromagnet yoke to form an axial electromagnet together with the outer ring. The axial electromagnet including the outer ring serving as an electromagnet yoke and the electromagnet coil faces to a permanent magnet provided in a casing through the flange portion; thus, an axial magnetic bearing is formed by the axial electromagnet and the permanent magnet.

In the aforementioned bearing device, preferably, a radial attraction-force generating portion causing a magnetic attraction force acting on the flange portion from the axial electromagnet to have a radial attraction force is formed on an axial electromagnet facing surface of the flange portion.

In some cases, the radial attraction-force generating portion is formed such that at least one annular groove is provided on the axial electromagnet facing surface of the flange portion. Herein, the annular groove is coaxial with the axial electromagnet, and the annular groove and the axial electromagnet are displaced in the radial direction from a position at which the annular groove and the axial electromagnet exactly faces to each other in the axial direction, Further, the radial attraction-force generating portion is formed such that the axial electromagnet facing surface of the flange portion is tapered.

By the presence of this radial attraction-force generating portion, a restraint force acts in a direction that an eccentric rotation of the rotation shaft is restored to a coaxial state, which can reduce the floating revolution number of the radial foil bearing and can improve the durability.

With the fuel-cell compressed-air supplying device according to the present invention, the rotation shaft is supported in the radial direction by the radial foil bearings (dynamic-pressure gas bearings) and in the axial direction by the control-type axial magnetic bearing, which can suppress the reduction of the fatigue life of the bearings due to high-speed rotation and also can eliminate the necessity of providing the function of circulating lubricating oil, thereby enabling the reduction of the size of the compressed-air supplying device. Furthermore, the axial electromagnets of the axial magnetic bearing are integrated with the radial foil bearings, respectively, which can shorten the length in the axial direction, can achieve high-speed rotation and can further reduce the size.

### BRIEF DESCRIPTION OF THE DRAWINGS

Fig. 1 is a block diagram illustrating a fuel-cell apparatus employing a fuel-cell compressed-air supplying device according to the present invention;
Fig. 2 is a longitudinal cross-sectional view schematically illustrating a first embodiment of the fuel-cell compressed-air supplying device according to the present invention;
Fig. 3 is a cross-sectional view illustrating a radial foil bearing for use in the fuel-cell compressed-air supplying device according to the present invention;
Fig. 4 is an enlarged view illustrating a radial attraction-force generating portion illustrated in Fig. 1;
Fig. 5 illustrates a configuration of another radial attraction-force generating portion, and corresponds to Fig. 4;
Fig. 6 illustrates a configuration of still another radial attraction-force generating portion, and corresponds to Fig. 4; and
Fig. 7 illustrates a configuration of yet another radial attraction-force generating portion, and corresponds to Fig. 4.

### DETAILED DESCRIPTION OF THE PREFERRED EMBODIMENTS

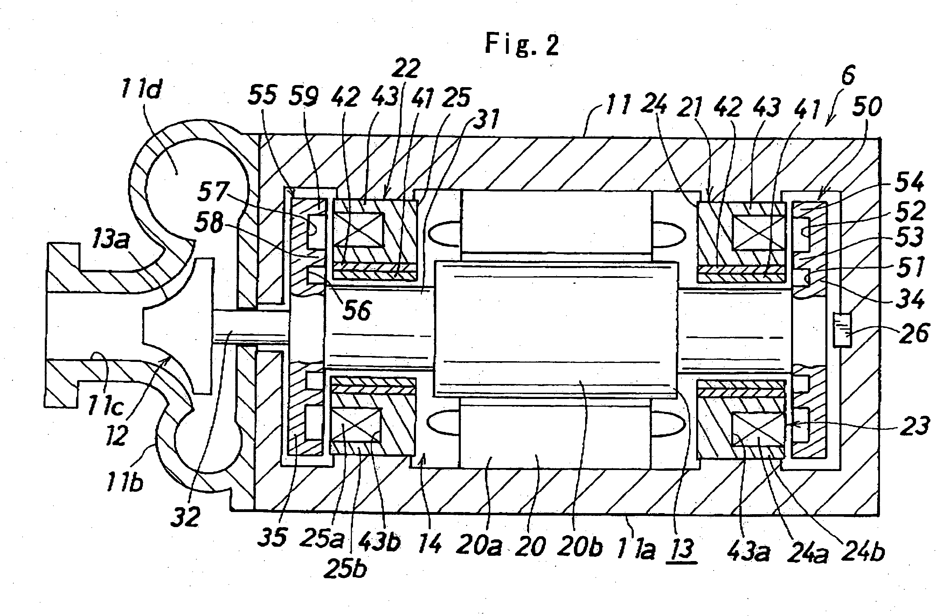

There will be described embodiments of the present invention, with reference to the drawings. In the following description, the right and the left in Fig. 2 will be designated as front and back, respectively.

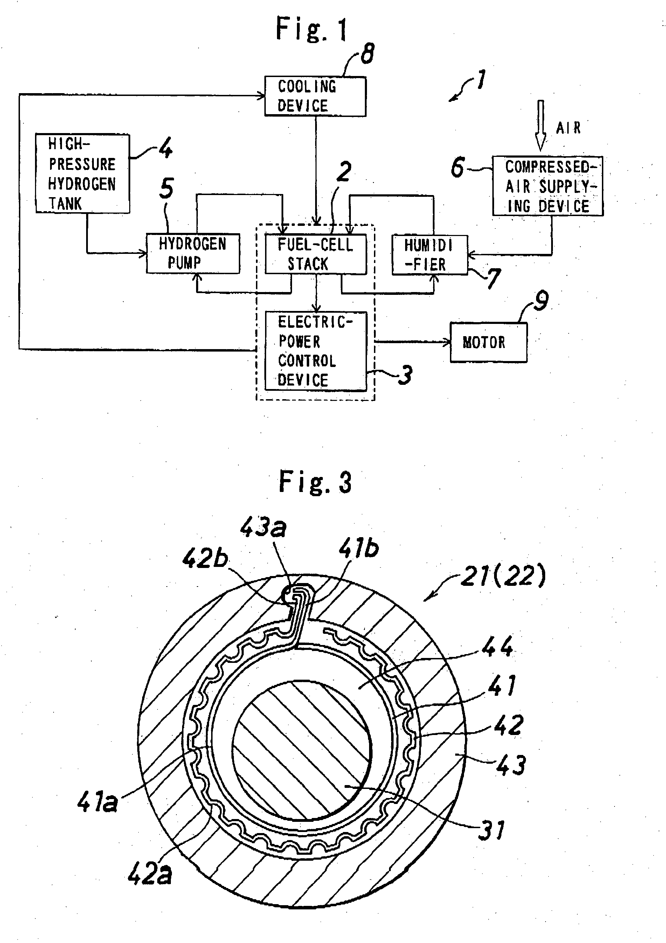

Fig. 1 illustrates a fuel-cell apparatus to be mounted in a vehicle which employs a fuel-cell compressed-air supplying device according to the present invention. The fuel-cell apparatus (1) includes a fuel-cell stack (2), an electric-power control device (3) which controls the electric power supplied from the fuel-cell stack (2), a high-pressure hydrogen tank (4) and a hydrogen pump (5) which supply hydrogen to the fuel-cell stack (2), a compressed-air supplying device (6) which supplies compressed air to the fuel-cell stack (2), a humidifier (7) which humidifies the compressed air supplied from the compressed-air supplying device (6), and a cooling device (8) which cools the fuel-cell stack (2) and the electric-power control device (3), wherein a motor (9) for running the vehicle is driven by the electric energy provided from the fuel-cell stack (2).

Fig. 2 illustrates the general configuration of the first embodiment of the fuel-cell compressed-air supplying device according to the present invention, wherein the fuel-cell compressed-air supplying device (6) includes a centrifugal compressor (12) provided within a casing (11) and a bearing device (14) which supports a rotation shaft (13) of the compressor (12).

The centrifugal compressor (12) is a non-displacement type compressor in which the rotation shaft (13) which is a horizontal shaft is rotated within the hermetic casing (11) having substantially a cylindrical shape which is placed along an anteroposterior and horizontal axis.

The casing (11) is constituted by a rotation-shaft supporting portion (11a) at the front side and a gas flow channel portion (11b) at the rear side.

The rotation shaft (13) has a stepped-shaft shape and is placed in the space within the rotation-shaft supporting portion (11a) . An impeller (13a) positioned in the space within the gas flow channel portion (11b) is secured to the rear end of the rotation shaft (13),

Inside the rotation-shaft supporting portion (11a), there are provided a built-in motor (20) for rotating the rotation shaft (13) at a high speed, a pair of front and rear radial foil bearings (21) and (22) which support the rotation shaft (13) in the radial direction, and a control-type axial magnetic bearing (23) which is integrated with the front and rear radial foil bearings (21) and (22) and support the rotation shaft (13) in the axial direction (anteroposterior direction).

The motor (20) is constituted by a stator (20a) provided at the rotation-shaft supporting portion (11a) and a rotor (20b) provided at the rotation shaft (13).

The bearing device (14) is constituted by the front and rear radial foil bearings (21) and (22), and the axial magnetic bearing (23).

A gas inlet channel (11c) is provided at the rear end of the space within the gas flow channel portion (11b). The rotation of the rotation shaft (13) causes the impeller (13a) to rotate. Through the rotation of the impeller (13a), air is flowed into a space (11d) in the gas flow-channel portion (11b) through the gas inlet channel (11c), then is compressed within the space (11d) and is discharged through a gas outlet channel, not illustrated, which is communicated with the space (11d).

The stepped rotation shaft (13) is constituted by a larger-diameter portion (31) on which the rotor (20b) of the motor (20) is provided at the intermediate portion in the axial direction, a smaller-diameter portion (32) which is continuous with the rear side of the larger-diameter portion (31), a front flange portion (34) which is provided on the front end portion of the larger-diameter portion (31), and a rear flange portion (35) which is provided on the rear end portion of the larger-diameter portion (31). The impeller (13a) is mounted to the rear end portion of the smaller-diameter portion (32), and the radial foil bearings (21) and (22) are provided in the vicinity of the both end portions of the larger-diameter portion (31) such that slight clearance are formed between the radial foil bearing (21) and the flange portion (34) and between the radial foil bearing (22) and the flange portion (35), respectively.

As illustrated in Fig. 3, each of the radial foil bearings (21) (22) is constituted by a flexible top foil (bearing foil) (41) placed radially outside of the larger-diameter portion (31) of the rotation shaft with a bearing clearance (44) interposed therebetween, a bump foil (elastic member) (42) placed radially outside of the top foil (41), and an outer ring (43) placed radially outside of the bump foil (42).

The top foil (41) is made of a band-shaped stainless-steel plate and is formed by rolling the band-shaped stainless-steel plate into a cylindrical shape having opposite longitudinal ends adjacent to each other without circumferential overlapping, then cutting and bending, in the radial direction, the opposite axial end portions of one end portion of the cylindrically-shaped steel plate and then folding their tip ends. The cylindrical portion (41a) other than the cut-and-bent portions forms the main portion of the top foil, while the cut-and-bent portions (41b) form engagement portions of the top foil (41).

The bump foil (42) is constituted by a cylindrical portion (42a) made of a stainless-steel waveform plate member deformed into a cylindrical shape and an engagement portion (42b) which is continuous with one end of the cylindrical portion (42a) and is positioned radially outside of the cylindrical portion (42a).

An engagement groove (43c) extending substantially in the radial direction is formed in the inner peripheral surface of the outer ring (43). The cylindrical portion (42a) of the bump foil (42) is placed along the inner peripheral surface of the outer ring (43) and the engagement portion (42b) is engaged with the engagement groove (43c) of the outer ring (43) so that the bump foil (42) is mounted to the outer ring (43). Further, the cylindrical portion (41a) of the top foil (41) is interposed between the bump foil (42) and the larger-diameter portion (31) of the rotation-shaft and the engagement portion (41b) thereof is engaged with the engagement groove (43c) in the outer ring (43) so that the top foil (41) is mounted to the outer ring (43) .

Since the top foil (41) is made of a band-shaped stainless-steel plate rolled into a cylindrical shape having opposite longitudinal ends adjacent to each other without circumferential overlapping and, thus, has a constant radius of curvature and high roundness, the radial foil bearings (21) (22) have excellent performance for supporting of the rotation shaft (13) and excellent characteristics for floating the rotation shaft (13).

The outer rings (43) of the respective radial foil bearings (21) (22) are made of a magnetic substance. An annular concave portion (43a) is provided on the axial outside end surface (front end surface) of the outer ring (43) of the front radial foil bearing (21) so as to face to the front flange portion (34), and an annular concave portion (43b) is provided on the axial outside end surface (rear end surface) of the outer ring (43) of the rear radial foil bearing (22) so as to face to the rear flange portion (35).

An electromagnet coil (24a) is fitted into the annular concave portion (43a) of the outer ring (43) of the front radial foil bearing (21), and an electromagnet coil (25a) is fitted into the annular concave portion (43b) of the outer ring (43) of the rear radial foil bearing (22). As a result, the outer rings (43) made of a magnetic substance also serve as yokes (24b) (25b) of axial electromagnets (24) (25). The front axial electromagnet (24) facing to the front flange portion (34) is formed by the outer ring (43) of the front radial foil bearing (21) (that is, the electromagnet yoke (24b)) and the electromagnet coil (24a), and the rear axial electromagnet (25) facing to the rear flange portion (35) is formed by the outer ring (43) of the rear radial foil bearing (22), (that is, the electromagnet yoke (25b)) and the electromagnet coil (24b).

The axial magnetic bearing (23) is constituted by the front axial electromagnet (24) and the rear axial electromagnet (25) formed as described above.

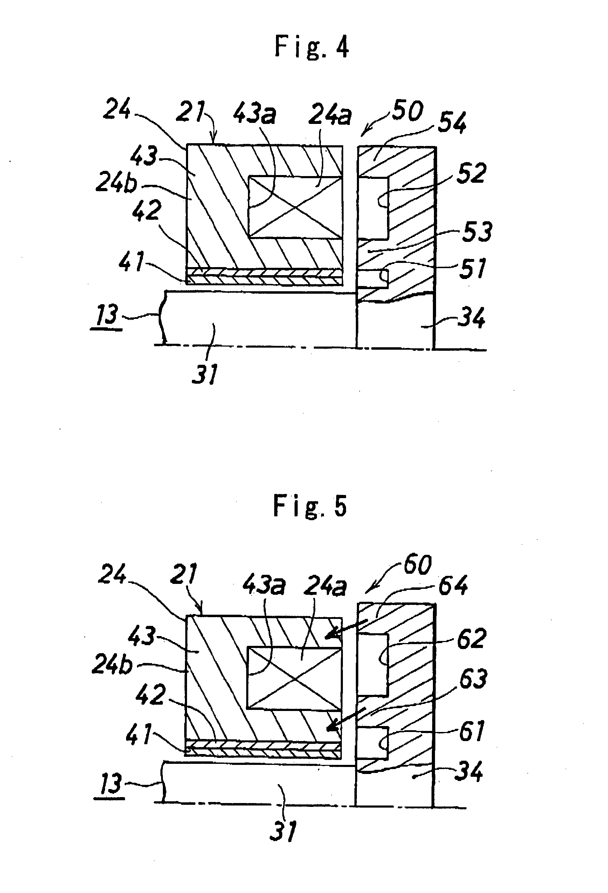

As illustrated in Fig. 4 in an enlarged manner, a smaller-diameter annular groove (51) and a larger-diameter annular groove (52) are provided on the rear surface of the front flange portion (34). Thus, an inner attracted portion (53) which receives a magnetic attraction force from the front axial electromagnet (24) is formed radially inside of the larger-diameter annular groove (52), and an outer attracted portion (54) which receives a magnetic attraction force from the front axial electromagnet (24) is formed radially outside of the larger-diameter annular groove (52). The larger-diameter annular groove (52) is provided so as to exactly face to the electromagnet coil (24a) of the axial electromagnet (24) in the axial direction. In the state that the coaxial state of the rotation shaft (13) is ensured, the inner attracted portion (53) and the outer attracted portion (54) face to the electromagnet yoke (24b) and receive only axial forces, respectively. When the rotation shaft (13) is eccentric, radial forces are generated between the axial electromagnet (24) and the respective attracted portions (53) (54), and this radial force acts on a direction that an eccentric rotation of the rotation shaft (13) is restored to the coaxial state. Thus, the inner attracted portion (53) and the outer attracted portion (54) constitute a front radial attraction-force generating portion (50) which causes a magnetic attraction force acting on the front flange portion (34) from the front axial electromagnet (24) to have a radial attraction force.

Similarly, a smaller-diameter annular groove (56) and a larger-diameter annular groove (57) are provided on the front surface of the rear flange portion (35). Thus, an inner attracted portion (58) which receives a magnetic attraction force from the rear axial electromagnet (25) is formed radially inside of the larger-diameter annular groove (57), and an outer attracted portion (59) which receives a magnetic attraction force from the rear axial electromagnet (25) is formed radially outside of the larger-diameter annular groove (57). The larger-diameter annular groove (57) is provided so as to exactly face to the electromagnet coil (25a) of the axial electromagnet (25) in the axial direction. In the state that the coaxial state of the rotation shaft (13) is ensured, the inner attracted portion (58) and the outer attracted portion (59) face to the electromagnet yoke (25b) and receive only axial forces, respectively. When the rotation shaft (13) is eccentric, radial forces are generated between the axial electromagnet (25) and the respective attracted portions (58) (59), and this radial force acts on a direction that an eccentric rotation of the rotation shaft (13) is restored to the coaxial state. Thus, the inner attracted portion (58) and the outer attracted portion (59) constitute a rear radial attraction-force generating portion (55) which causes a magnetic attraction force acting on the rear flange portion (35) from the rear axial electromagnet (25) to have a radial attraction force.

The rotation-shaft supporting portion (11a) of the casing (11) is provided with an axial position sensor (26) which detects the axial position of the rotation shaft (13). In the axial magnetic bearing (23), then, a current of the electromagnet coil (24a) of the front axial electromagnet (24) and a current of the electromagnet coil (25a) of the rear axial electromagnet (25) are controlled based on the position of the rotation shaft (13) which is detected by the position sensor (26). The currents flowed into the electromagnet coils (24a) (25a) are controlled such that a magnetic attraction force which is equal to a force acting on the impeller (13a) by rotation is generated on each of the axial electromagnets (24) (25). Thus, the rotation shaft (13) is supported at an axial predetermined position in a non-contact manner.

Although not illustrated in the figure, the radial foil bearings (21) and (22) are not limited to the aforementioned bearings. The radial foil bearing may include a bearing foil which is constituted by a plurality of flexible foil pieces each having a bearing surface facing to the rotation shaft, and an outer ring which holds the bearing foil between the outer ring and the rotation shaft.

With the fuel-cell compressed-air supplying device (6) of the aforementioned first embodiment, the rotation shaft (13) is supported in the radial direction by the radial foil bearings (21) and (22). In rotation, the rotation shaft (13) is supported in the radial direction by the dynamic pressures generated from the respective foil bearings (21) and (22) in a non-contact manner. Moreover, the rotation shaft (13) is supported in the axial direction by the axial magnetic bearing (23). If the axial force acting on the impeller (13a) is varied, attraction forces corresponding thereto are generated at the axial electromagnets (24) and (25). Thus, the rotation shaft (13) is stably supported in a non-contact manner without receiving an influence of rotational load variation, its smooth rotation is ensured and the rotation shaft (13) is excellent in durability (long life).

Furthermore, the radial attraction-force generating portions (50) (55) which cause attraction forces acting on the flange portions (34) (35) from the axial electromagnets (24) (25) to have a radial attraction force are formed on the axial electromagnet facing surfaces (rear surface of front flange portion (34) and front surface of rear flange portion (35)) of the flange portions (34) (35) of the rotation shaft (13). Therefore, if the rotation shaft (13) is eccentric, the axial magnetic bearing (23) can generate restraint forces in the direction that an eccentric rotation of the rotation shaft (13) is restored to the coaxial state, and also have a function as the radial magnetic bearing. Thus, it is possible to reduce the floating revolution number of the radial foil bearings (21) and (22), and to improve the life of the radial foil bearings (21) and (22).

In the radial attraction-force generating portions (50) (55) of the aforementioned embodiment, the larger-diameter annular grooves (52) (57) are provided so as to exactly face to the axial electromagnets (24) (25). However, the radial attraction-force generating portion can be constituted variously as long as attraction forces acting on the flange portions (34) (35) from the axial electromagnets (24) (25) have a radial attraction force. In the aforementioned embodiment, in the coaxial state of the rotation shaft (13), the inner attracted portions (53) (58) and the outer attracted portions (54) (59) are designed to receive only axial forces from the corresponding axial electromagnets (24) (25). Also in the coaxial state of the rotation shaft (13), however, a radial attraction force can act on the inner attracted portions (63) (68) and the outer attracted portions (64) (69). Embodiments thereof are illustrated in Figs. 5 to 7.

In a radial attraction-force generating portion (60) illustrated in Fig. 5, a larger-diameter annular groove (62) is coaxial with an axial electromagnet (24), but the larger-diameter annular groove (62) is displaced relative to an electromagnet coil (24a) of the axial electromagnet (24) outwardly in the radial direction from the position exactly facing to the electromagnet coil (24a) of the axial electromagnet (24) in the axial direction. Thus, an inner attracted portion (63) and an outer attracted portion (64) are displaced from the position exactly facing to an electromagnet yoke (24b), a force in a direction shown by an arrow in the same figure acts on the inner attracted portion (63) and the outer attracted portion (64), and an inward attraction force constantly acts in the radial direction.

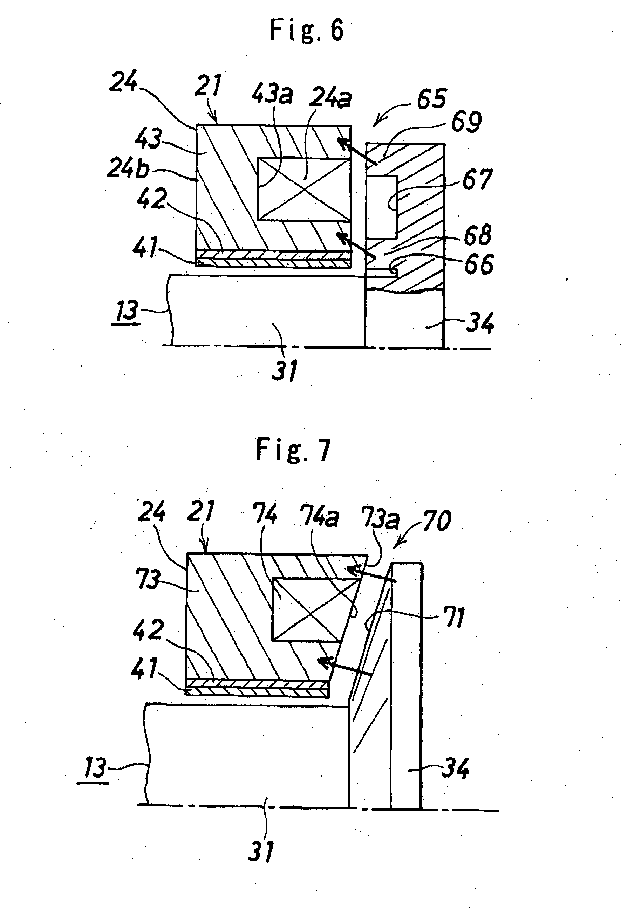

In a radial attraction-force generating portion (65) illustrated in Fig. 6, a larger-diameter annular groove (67) is coaxial with an axial electromagnet (24), but the larger-diameter annular groove (67) is displaced relative to an electromagnet coil (24a) of the axial electromagnet (24) inwardly in the radial direction from the position exactly facing to the electromagnet coil (24a) of the axial electromagnet (24) in the axial direction. Thus, an inner attracted portion (68) and an outer attracted portion (69) are displaced from the position exactly facing to an electromagnet yoke (24b), a force in a direction shown by an arrow in the same figure acts on the inner attracted portion (68) and the outer attracted portion (69), and an outward attraction force constantly acts in the radial direction.

In a radial attraction-force generating portion (70) illustrated in Fig. 7, a flange portion (34) is not provided with irregularities, but has an axial electromagnet facing surface formed into a tapered surface (71). In correspondence therewith, the surfaces of an outer ring (73) and an electromagnet coil (74) of a radial foil bearing (21) constituting an axial electromagnet (72), which face to the flange portion (34), are formed into tapered surfaces (73a) and (74a), respectively. Thus, a force in a direction shown by an arrow in the same figure acts on the tapered surface (71) of the flange portion (34), and an outward attraction force constantly acts in the radial direction.

In the radial attraction-force generating portions (60), (65) and (70) illustrated in Figs. 5, 6 and 7, even when the rotation shaft (13) is in the coaxial state, the radial force acts on the rotation shaft (13) and when the rotation shaft (13) is eccentric, the axial magnetic bearing (23) can generate a restraint force in a direction that the the eccentric rotation of the rotation shaft (13) is restored to the coaxial state, and has a function as the radial magnetic bearing. Then, the attraction force constantly acts in the radial direction, which can further reduce the floating revolution number of the radial foil bearings (21) and (22) and can further improve the life of the radial foil bearings (21) and (22), as compared with that illustrated in Fig. 4.

## Claims

1. A fuel-cell compressed-air supplying device for compressing air and supplying the compressed air to a fuel-cell, comprising:
a centrifugal compressor provided in a casing; and
a bearing device for supporting a rotation shaft of the compressor, wherein
the bearing device includes a pair of radial foil bearings provided coaxially with the rotation shaft for supporting the rotation shaft in the radial direction, and control-type axial magnetic bearing having a pair of axial electromagnets facing to flange portions provided in the rotation shaft in the axial direction for supporting the rotation shaft in the axial direction, and
the axial electromagnet of the axial magnetic bearing is integrated with the radial foil bearing.

2. The fuel-cell compressed-air supplying device according to Claim 1, wherein
a radial attraction-force generating portion causing a magnetic attraction force acting on the flange portion from the axial electromagnet to have a radial attraction force is formed on an axial electromagnet facing surface of the flange portion.

3. The fuel-cell compressed-air supplying device according to Claim 2, wherein
the radial attraction-force generating portion is formed such that at least one annular groove is provided on the axial electromagnet facing surface of the flange portion.

4. The fuel-cell compressed-air supplying device according to Claim 3, wherein
the annular groove is coaxial with the axial electromagnet, and the annular groove and the axial electromagnet are displaced in the radial direction from a position at which the annular groove and the axial electromagnet exactly face to each other in the axial direction.

5. The fuel-cell compressed-air supplying device according to Claim 2, wherein
the radial attraction-force generating portion is formed such that the axial electromagnet facing surface of the flange portion is tapered.

6. The fuel-cell compressed-air supplying device according to Claim 1, wherein
the radial foil bearings include a flexible bearing foil having a bearing surface facing to the rotation shaft in the radial direction, an elastic member for supporting the bearing foil, and an outer ring for holding the bearing foil and the elastic member between the outer ring and the rotation shaft.

7. The fuel-cell compressed-air supplying device according to Claim 6, wherein
the axial magnetic bearing controls a force acting between a pair of axial electromagnets including an electromagnet yoke and an electromagnet coil.

8. The fuel-cell compressed-air supplying device according to Claim 7, wherein
the outer ring of the radial foil bearing serves as an electromagnet yoke and the electromagnet coil is fitted into a concave portion provided on the outer ring of the radial foil bearing, so that the axial electromagnet of the axial magnetic bearing is integrated with the radial foil bearing.

9. The fuel-cell compressed-air supplying device according to Claim 1, wherein
one of the axial electromagnets faces to the flange portion provided at one end of the rotation shaft, and the other axial electromagnet faces to the flange portion provided at the other end of the rotation shaft.

## Patentansprüche

1. Druckluftzufuhrvorrichtung für eine Brennstoffzelle, zur Kompression von Luft und zur Zuführung der komprimierten Druckluft zu einer Brennstoffzelle, umfassend:
einen Zentrifugalkompressor in einem Gehäuse; und
eine Lagervorrichtung zur Lagerung einer Rotationswelle des Kompressors,
wobei die Lagervorrichtung ein Paar radialer Folienlager umfasst, die koaxial zu der Rotationswelle zur Lagerung der Rotationswelle in der radialen Richtung vorgesehen sind, und ein axiales Magnetlager vom Steuerungstyp mit einem Paar von Elektromagneten, die Flanschbereichen zugewandt sind, die in der Rotationswelle in der axialen Richtung zur Lagerung der Rotationswelle in der axialen Richtung vorgesehen sind,
wobei der axiale Elektromagnet des axialen Magnetlagers in das radiale Folienlager integriert ist.

2. Druckluftzufuhrvorrichtung für eine Brennstoffzelle gemäß Anspruch 1,
bei welcher ein Bereich zur Erzeugung einer radialen Anziehungskraft, der eine magnetische Anziehungskraft auf den Flanschbereich von dem axialen Elektromagneten zur Erzeugung einer radialen Anziehungskraft bewirkt, auf einer dem axialen Elektromagneten zugewandten Fläche des Flanschbereichs ausgebildet ist.

3. Druckluftzufuhrvorrichtung für eine Brennstoffzelle gemäß Anspruch 2,
bei welcher der die radiale Anziehungskraft erzeugende Bereich derart ausgebildet ist, dass zumindest eine ringförmige Nut auf der dem axialen Elektromagneten zugewandten Oberfläche des Flanschbereichs vorgesehen ist.

4. Druckluftzufuhrvorrichtung für eine Brennstoffzelle gemäß Anspruch 3,
bei welcher die ringförmige Nut koaxial zu dem axialen Elektromagneten ausgebildet ist, und die ringförmige Nut und der axiale Elektromagnet in radialer Richtung gegenüber einer Position versetzt sind, in welcher die ringförmige Nut und der axiale Elektromagnet einander in der axialen Richtung genau gegenüber liegen.

5. Druckluftzufuhrvorrichtung für eine Brennstoffzelle gemäß Anspruch 2,
bei welcher der die radiale Anziehungskraft erzeugende Bereich derart ausgebildet ist, dass die dem axialen Elektromagneten zugewandte Oberfläche des Flanschbereichs sich verjüngt.

6. Druckluftzufuhrvorrichtung für eine Brennstoffzelle gemäß Anspruch 1,
bei welcher die radialen Folienlager eine flexible Lagerfolie umfassen, die eine Lagerfläche aufweist, die der Rotationswelle in radialer Richtung zugewandt ist, ein elastisches Element zur Lagerung der Lagerfolie und einen äußeren Ring zum Halten der Lagerfolie und des elastischen Elements zwischen dem äußeren Ring und der Rotationswelle.

7. Druckluftzufuhrvorrichtung für eine Brennstoffzelle gemäß Anspruch 6,
bei welcher das axiale Magnetlager eine Kraft steuert, die zwischen einem Paar axialer Elektromagnete wirkt, welche ein elektromagnetisches Joch und eine elektromagnetische Spule umfassen.

8. Druckluftzufuhrvorrichtung für eine Brennstoffzelle gemäß Anspruch 7,
bei welcher der äußere Ring des radialen Folienlagers als ein elektromagnetisches Joch dient, und die elektromagnetische Spule in einen konkaven Bereich auf dem äußeren Ring des radialen Folienlagers eingepasst ist, derart, dass der axiale Elektromagnet des axialen Magnetlagers in das radiale Folienlager integriert ist.

9. Druckluftzufuhrvorrichtung für eine Brennstoffzelle gemäß Anspruch 1,
bei welcher einer der axialen Elektromagnete dem Flanschbereich an einem Ende der Rotationswelle zugewandt ist, und der andere axiale Elektromagnet dem Flanschbereich am anderen Ende der Rotationswelle zugewandt ist.

## Revendications

1. Dispositif d'alimentation en air comprimé pour pile à combustible, pour comprimer de l'air et fournir l'air comprimé à une pile à combustible, comportant:
un compresseur centrifuge logé dans un carter ; et
un dispositif de paliers pour supporter un arbre de rotation du compresseur, dans lequel
le dispositif de paliers comprend une paire de paliers radiaux à feuille montés coaxialement à l'arbre de rotation pour supporter, dans la direction radiale, l'arbre de rotation, et un palier magnétique axial du type à commande ayant une paire d'électroaimants axiaux en regard de parties formant brides disposées dans la direction axiale dans l'arbre de rotation pour soutenir dans la direction axiale l'arbre de rotation, et
l'électroaimant axial du palier magnétique axial est intégré dans le palier radial à feuille.

2. Dispositif d'alimentation en air comprimé pour pile à combustible selon la revendication 1, dans lequel
une partie de génération de force radiale d'attraction, qui amène une force d'attraction magnétique agissant sur la partie formant bride depuis l'électroaimant axial à avoir une force radiale d'attraction, est formée sur une surface de la partie formant bride en regard de l'électroaimant axial.

3. Dispositif d'alimentation en air comprimé pour pile à combustible selon la revendication 2, dans lequel
la partie de génération de force radiale d'attraction est formée de telle sorte qu'au moins une gorge annulaire est présente sur la surface de la partie formant bride en regard de l'électroaimant axial.

4. Dispositif d'alimentation en air comprimé pour pile à combustible selon la revendication 3, dans lequel
la gorge annulaire est coaxiale à l'électroaimant axial, et la gorge annulaire et l'électroaimant axial sont décalés dans la direction radiale par rapport à une position dans laquelle la gorge annulaire et l'électroaimant axial sont exactement en regard l'un de l'autre dans la direction axiale.

5. Dispositif d'alimentation en air comprimé pour pile à combustible selon la revendication 2, dans lequel
la partie de génération de force radiale d'attraction est formée de telle sorte que la surface de la partie formant bride en regard de l'électroaimant axial est conique.

6. Dispositif d'alimentation en air comprimé pour pile à combustible selon la revendication 1, dans lequel
les paliers radiaux à feuille comprennent une feuille flexible de palier ayant une surface de palier en regard de l'arbre de rotation dans la direction radiale, un élément élastique pour soutenir la feuille de palier, et une bague extérieure pour retenir la feuille de palier et l'élément élastique entre la bague extérieure et l'arbre de rotation.

7. Dispositif d'alimentation en air comprimé pour pile à combustible selon la revendication 6, dans lequel
le palier magnétique axial commande une force agissant entre une paire d'électroaimants axiaux comprenant une culasse d'électroaimant et une bobine d'électroaimant.

8. Dispositif d'alimentation en air comprimé pour pile à combustible selon la revendication 7, dans lequel
la bague extérieure du palier radial à feuille sert de culasse d'électroaimant et la bobine d'électroaimant est logée dans une partie concave présente sur la bague extérieure du palier radial à feuille de telle sorte que l'électroaimant axial du palier magnétique axial est intégré dans le palier radial à feuille.

9. Dispositif d'alimentation en air comprimé pour pile à combustible selon la revendication 1, dans lequel
l'un des électroaimants axiaux est en regard de la partie formant bride présente à une extrémité de l'arbre de rotation et l'autre électroaimant axial est en regard de la partie formant bride présente à l'autre extrémité de l'arbre de rotation.
